# EUROPEAN PATENT SPECIFICATION

(11) **EP 3 470 440 B1**
(45) Date of publication and mention of the grant of the patent: **21.04.2021**
(21) Application number: 17195649.3
(22) Date of filing: 10.10.2017
(51) Int. Cl.: C08F 8/06, C08F 110/02, C08J 3/05, C08L 23/30, C08K 3/22, C08K 3/30, C09D 7/65, C10M 143/18, C08F 8/00, C08F 8/50, C08L 71/02

(54) **OXIDIZED POLYETHYLENE WAX**
OXIDIERTES POLYETHYLENWACHS
CIRE DE POLYÉTHYLÈNE OXYDÉE

(43) Date of publication of application: 17.04.2019
(73) Proprietor: Thai Polyethylene Co., Ltd., 10800 Bangkok (TH)
(72) Inventor: Sahasyodhin, Pattarit, 10800 Bangkok (TH); Kaewking, Tawatchai, 10800 Bangkok (TH)
(74) Representative: Scholz, Volker

(56) References cited:
- WO-A1-00/48805
- JP-A- H03 167 204
- US-A- 3 519 588
- DATABASE CA [Online] CHEMICAL ABSTRACTS SERVICE, COLUMBUS, OHIO, US; 1 June 2017 (2017-06-01), QI, FENGQUAN ET AL: "Preparation method of rheological additive modified specific wax for solvent type coating material", XP002778584, retrieved from STN Database accession no. 2017:878636 -& CN 106 752 263 A (ZIBO LINZI QIQUAN INDUSTRIAL TRADE CO., LTD., PEOP. REP. CHINA) 31 May 2017 (2017-05-31)

## Description

### FIELD OF THE INVENTION

The present invention relates to a method for preparing an oxidized polyethylene wax, an oxidized polyethylene wax obtainable this way, the use thereof and a wax emulsion comprising the oxidized polyethylene wax.

### BACKGROUND OF THE INVENTION

An oxidized wax is a polar form of a polyethylene wax which is widely used in emulsions for coating agents and/or lubricant agents. The oxidized polyethylene wax can be produced by oxidizing polyethylene wax. Depending on the oxidation process parameters and polyethylene wax features, various properties of the oxidized polyethylene wax can be obtained. If the process conditions are not appropriate, the oxidation may cause a cross-linked by-product which leads to an increased viscosity of the mixture during the process and formation of a gel-like product, resulting in difficulties to control the product specification. This also causes poor emulsifiability and poor clarity of the wax emulsion.

There were some attempts to overcome this problem. For example, US6211303B1 discloses a process for preparing polar wax products by oxidation of nonpolar polyethylene waxes wherein the oxidation of the polyethylene wax is carried out with addition of inorganic or organic acids to the reaction mixture before commencement or in the early stage of the oxidation.

CN104277229A discloses a method for preparing a high-density polyethylene wax emulsion by adding 20-50% fatty alcohol ethoxylates as a dispersant to thermal cracked high-density polyethylene before oxidation process to prevent cross-linking reaction.

US2952649A discloses a new emulsifiable self-polishing wax composition that can be used as a carnauba replacement by adding 5-30% of a very low molecular weight species of paraffin to the polyethylene prior to oxidation. However, the resulting wax shows an acid number in the range of 3-6 which is more difficult to emulsify. Thus, it is needed to add some alkali carbonates or amines to stabilize to give a faster reaction and obtain the wax with acid number of 1-15. Besides, the very low melting point of paraffin may lead to colorant in the final product after process at high temperature.

Therefore, it is an object of the present invention to overcome drawbacks of the prior art, in particular the disadvantage of crosslinking during oxidation. Particularly, it is an object of the invention to provide the method for preparing an oxidized polyethylene wax suitable for reducing cross-linking during preparation of the oxidized polyethylene wax.

### DETAILED DESCRIPTION

The above object is achieved by a method for preparing an oxidized polyethylene wax comprising oxidizing a mixture of a polyethylene wax having a number average molecular weight of more than 1000 to 4000 g/mol, preferably more than 1000 to 3000 g/mol, even more preferred 1200 to 2500 g/mol according to gel permeation chromatography and a low molecular weight polyethylene wax having a number average molecular weight of 100 to 1000 g/mol, preferably 100 to 900 g/mol, even more preferred 200 to 800 g/mol according to gel permeation chromatography wherein the polyethylene wax has a density in the range of 0.92-0.97 g/cm³, according to ASTM D1505; the low molecular weight polyethylene wax has a viscosity of 40 to 200 mPa·s (cP), according to ASTM D3236; and the oxidized polyethylene wax has an acid number of 15 to 35 according to ASTM D1386.

Preferably, the polyethylene wax has a weight average molecular weight of 4000 to 20000 g/mol, preferably 4000 to 18000 g/mol, even more preferred 4500 to 16000 g/mol according to gel permeation chromatography and/or the low molecular weight polyethylene wax has a weight average molecular weight of 100 to 30000 g/mol, preferably 1000 to 25000 g/mol, even more preferred 1500 to 20000 g/mol according to gel permeation chromatography. By mixing the low molecular weight polyethylene wax and the polyethylene wax prior to the oxidation, the viscosity of the mixture can be controlled and crosslinking between the polymer chains can be reduced. Thus, the satisfactory properties of the oxidized polyethylene wax can be controlled. Furthermore, the oxidized polyethylene wax has a suitable acid number which is easy to emulsify to a wax emulsion with good clarity.

In the present invention, the polyethylene wax may have an acid number of zero.

In one embodiment, the polyethylene wax can be obtained from thermal cracking of polyethylene. Thermal cracking may be initiated by heat or light and takes place at C-C bond to generate the shorter chain hydrocarbon. The degree of cracking may be controlled by the reaction time and temperature. Aguado et al., Energy & Fuels, 2002, 16, 1429-1437, discloses a respective wax formation using pyrolysis of polyolefins. Also, polyethylene wax can be obtained from polyethylene polymerization which occurred via metallocene-catalyzed polymerization or traditional Ziegler/Natta-polymerization or from by-product of polyethylene polymerization. US 5,023,388 A and WO 2013/027958 A1 disclose the preparation of polyethylene wax in the presence of a metallocene catalyst. A process for preparing polyethylene waxes using Ziegler-Natta catalyst systems is disclosed in US 2010/0050900 A1.

In another embodiment, the low molecular weight polyethylene wax may have a weight average molecular weight of 100 to 30,000 g/mol, preferably 1,000 to 25,000 g/mol, even more preferred 1,500 to 20,000 g/mol according to Gel Permeation Chromatography, a density in the range of 0.92-0.96 g/cm³, a viscosity of 40 to 200 mPa·s (cP), and an acid number of zero.

The low molecular weight polyethylene wax can be obtained from polyethylene polymerization or as a by-product of polyethylene polymerization either via metallocene-catalyzed polymerization or traditional Ziegler/Natta-polymerization.

In a preferred embodiment, the mixture of polyethylene wax and low molecular weight polyethylene wax comprises 50-97 wt% of polyethylene wax and 3-50 wt% of low molecular weight polyethylene wax, more preferably, 75-90 wt% of polyethylene wax and 10-25 wt% of low molecular weight polyethylene wax.

The oxidized polyethylene wax has an acid number of 15 to 35, preferably 15 to 30 according to ASTM D1386.

In a preferred embodiment, the ratio Mw/Mn with respect to the polyethylene wax is from 3 to 10 and/or the ratio Mw/Mn with respect to the low molecular weight polyethylene wax is from 3 to 60.

Preferably, "comprising" in terms of the invention may be "consisting of'.

The oxidizing (oxidation) may be carried out in a temperature range of 120-190°C and a pressure range of 2-10 bar using pure oxygen, air, ozone or an oxygen containing gas, optionally in the presence of an oxidation catalyst e.g. di-tert-butylperoxide, other organic peroxides or hydroperoxides. More preferably, the temperature range is of 150-170°C and the pressure range is of 4-7 bar.

Stabilizing agents, such as alkali carbonates or amines, may be used in the oxidation to accelerate the reaction by stabilizing the oxidation intermediates.

The oxygen feed rate may be regulated to control the oxidation rate which might affect the viscosity of the reaction and also the acid number of the oxidized polyethylene wax product. In the present invention, air may be fed at 1000-10000 L/hr/kg; preferably, at 2000-5000 L/hr/kg.

The oxidizing process may further comprise stirring to make a homogeneous mixture and oxidation may occur throughout the homogeneous mixture. The stir speed rate may be from 300 to 1000 rpm. However, the speed rate may also depend on the size of the reaction vessel and the viscosity of the mixture.

The oxidation time may be 1-10 hours depending on the oxidation temperature, molecular weight of starting polyethylene wax, feed rate of oxygen, the presence of the catalyst and/or stabilizing agent and the desired acid number of the oxidized wax.

An acid number in a range of 15-30 is preferred for use in a wax emulsification. Wax with lower acid number is more difficult to emulsify.

The object is further achieved by an oxidized polyethylene wax obtainable by the method according to the present invention.

The object is further achieved by a use of the inventive oxidized polyethylene wax in a wax emulsion, or as a coating agent and/or a lubricant.

Finally, the object is achieved by a wax emulsion comprising
a) the inventive oxidized polyethylene wax;
b) a non-ionic surfactant;
c) potassium hydroxide and/or sodium hydroxide;
d) sodium metabisulfite; and
e) water.

In one embodiment, the amount of the oxidized polyethylene wax in the wax emulsion is from 5 to 35 wt% with respect to the total weight of the wax emulsion, preferably, 10 to 30 wt% with respect to the total weight of the wax emulsion.

In this regard, it may be preferred that the non-ionic surfactant is comprised in the inventive wax emulsion in an amount from 2 to 12 wt.%, preferably 3 to 10 wt.%. The potassium hydroxide and/or sodium hydroxide may be comprised in the inventive emulsion in a total amount from 0.5 to 1.5 wt.%, preferably 0.5 to 1.2 wt.%. The sodium metabisulfite may be comprised in the inventive wax emulsion in an amount from 0.05 to 0.5 wt.%, preferably 0.1 to 0.4 wt.%. The amount of water may be from 50 to 90 wt.% and is selected to balance the composition to a total amount of 100 wt.%.

In another embodiment, the oxidized polyethylene wax has a density of 0.93-0.99 g/cm³ , according to ASTM D1505.

More preferably, it has density of 0.93-0.97 g/cm³.

In the preferred embodiment, the oxidized polyethylene wax was obtainable by oxidizing the mixture comprising 50-97 wt% of polyethylene wax and 3-50 wt% of low molecular weight polyethylene wax with respect to the total weight of the mixture. More preferably, 75-90 wt% of polyethylene wax and 10-25 wt% of the low molecular weight polyethylene wax with respect to the total weight of the mixture.

**Measurement methods**

| **Properties** | **Method** |
|---|---|
| Acid number | ASTM D1386 |
| Viscosity | ASTM D3236 |
| Density (Gradient tube) | ASTM D1505 |
| Dropping point | ASTM D3954 |
| Penetration index | ASTM D1321 |

Molecular weights, weight average molecular weight (Mw) and number average molecular weight (Mn), were measured by Gel Permeation Chromatography (GPC). Around 24 mg of sample was dissolved in 8 ml of 1,2-dichlorobenzene at 150°C for 60 min. Then the sample solution, 200 µl, was injected into the high temperature GPC with IR4 detectors (Polymer Char, Spain) with flow rate of 1 ml/min at 140°C in column zone and 150°C in detector zone. The data was processed by GPC One® software, Polymer Char, Spain.

Molecular weight distribution is described by the ratio of Mw to Mn.

%Transmission was measured by UV-visible spectrophotometer at 550 nm.

### EXAMPLES

### Preparation of the oxidized polyethylene wax

### Examples 1-7

Polyethylene wax having weight average (Mw) molecular weight of 6575 g/mol (number average molecular weight (Mn)=1363 g/mol, Mw/Mn=4.82), a density of 0.92 g/cm³ and a viscosity of 170 mPa·s (cP) was mixed with low a molecular weight polyethylene wax having weight average molecular weight of 3565 g/mol (Mn=435 g/mol, Mw/Mn=8.19) and viscosity of 50 mPa·s (cP) at various ratio as shown in Table 1. The mixture was then oxidized. The temperature and pressure of the reaction was maintained at 150-170°C and 4-7 bar. The properties of the resulting oxidized wax are shown in Table 1.

**Table 1 The properties of the oxidized wax obtained from various ratio of polyethylene wax and low molecular weight polyethylene wax (Example 7 is a comparative example; 1 cP = 1 mPa·s)**

| **Example** | **Polyethylene wax (wt%)** | **Low molecular weight wax (wt%)** | **Properties of the oxidized wax** | | | | |
|---|---|---|---|---|---|---|---|
| | | | **Acid number (mg KOH/g wax)** | **Density (g/cm³)** | **Viscosity (cP @ 149°C)** | **Dropping point (°C)** | **Penetration index (dmm)** |
| 1 (comparative) | 100 | 0 | 16.4 | 0.94 | 400 | 102.8 | 1.5 |
| 2 | 93 | 7 | 16.2 | 0.94 | 221.6 | 103.2 | 1.5 |
| 3 | 84 | 16 | 16.4 | 0.94 | 165.2 | 103.5 | 1.5 |
| 4 | 77 | 23 | 16.2 | 0.94 | 106.8 | 104.1 | 1.6 |
| 5 | 68 | 32 | 16.3 | 0.95 | 82.5 | 104.3 | 1.6 |
| 6 | 55 | 45 | 16.1 | 0.95 | 41.2 | 104.4 | 1.7 |
| 7 | 0 | 100 | 16.3 | 0.95 | 10 | 106.2 | 2.2 |

When comparing the examples 1-7, it was found that the oxidized wax from polyethylene wax without addition of low molecular weight polyethylene wax shows a much higher viscosity while by mixing some amounts of low molecular weight polyethylene wax with polyethylene wax prior to the oxidation, the viscosity of the oxidized wax is reduced.

### Comparative example 8

Polyethylene wax having weight average molecular weight of 6575 g/mol (number average molecular weight (Mn)=1363 g/mol, Mw/Mn=4.82), density of 0.92 g/cm³ and viscosity of 170 mPa·s (cP).

Low molecular weight wax having weight average molecular weight of 3565 g/mol (Mn=435 g/mol, Mw/Mn=8.19) and viscosity of 50 mPa·s (cP).

Each wax was oxidized separately.

The temperature and pressure of the reaction was maintained at 150-170°C and 4-7 bar. The oxidized polyethylene wax and the oxidized low molecular weight wax were then (after being oxidized separate from each other) mixed at the ratio of 84:16. The oxidized wax mixture shows the properties as in table 2.

**Table 2 The properties of the oxidized wax obtained from separately oxidation of polyethylene wax and low molecular weight wax (1 cP = 1 m Pa·s)**

| **Example** | **Polyethylene wax (wt%)** | **Low molecular weight wax (wt%)** | **Properties of the oxidized wax** | | | | |
|---|---|---|---|---|---|---|---|
| | | | **Acid number (mg KOH/g wax)** | **Density (g/cm³)** | **Viscosity (cP @ 149°C)** | **Dropping point (°C)** | **Penetration index (dmm)** |
| 8 | 84 | 16 | 16.0 | 0.94 | 350 | 104.2 | 1.6 |

The oxidized polyethylene wax without addition of low molecular weight polyethylene wax shows an increased viscosity of 400 mPa·s (cP) while the oxidized low molecular weight polyethylene wax shows the viscosity of 10 mPa·s (cP).

The oxidized polyethylene wax and the oxidized low molecular weight wax were mixed at the ratio of 84:16. The viscosity of the mixture decreases to 350 mPa·s (cP); however, viscosity is still higher compared to that of the inventive examples 2-6. The result shows the inventive of addition of low molecular weight polyethylene prior to the oxidation.

### Preparation of polyethylene wax emulsion

The oxidized wax obtained previously (examples 1 and 3) was emulsified by mixing 18 wt% of the oxidized wax with 7 wt% of polyethylene glycol having ethylene oxide content of 9 and hydrophilic-lipophilic balance of 13, 0.5 wt% of potassium hydroxide 85%, 0.18 wt% of sodium metabisulfite and water. The mixture was then stirred vigorously The properties of wax emulsion are shown in Table 3.

**Table 3 The properties of the wax emulsion obtained from the oxidized wax prepared by the present invention.**

| **Example** | **Properties of wax emulsion** | |
|---|---|---|
| | **pH** | **% Transmission** |
| 1 | 10.3 | 69.4 |
| 3 | 9.4 | 82.5 |

The result shows that the oxidized wax from mixing of polyethylene wax and low molecular weight polyethylene wax prior to the oxidation (example 3) have higher clarity of wax emulsion than the oxidized wax from 100% polyethylene wax (example 1).

## Claims

1. A method for preparing an oxidized polyethylene wax comprising oxidizing a mixture of a polyethylene wax having a number average molecular weight of more than 1000 to 4000 g/mol, preferably more than 1000 to 3000 g/mol, even more preferred 1200 to 2500 g/mol according to gel permeation chromatography and a low molecular weight polyethylene wax having a number average molecular weight of 100 to 1000 g/mol, preferably 100 to 900 g/mol, even more preferred 200 to 800 g/mol according to gel permeation chromatography wherein
the polyethylene wax has a density in the range of 0.92-0.97 g/cm³, according to ASTM D1505;
the low molecular weight polyethylene wax has a viscosity of 40 to 200 m Pa·s (cP), according to ASTM D3236; and
the oxidized polyethylene wax has an acid number of 15 to 35 according to ASTM D1386.

2. The method according to claim 1 wherein the polyethylene wax has a weight average molecular weight of 4000 to 20000 g/mol, preferably 4000 to 18000 g/mol, even more preferred 4500 to 16000 g/mol according to gel permeation chromatography and/or the low molecular weight polyethylene wax has a weight average molecular weight of 100 to 30000 g/mol, preferably 1000 to 25000 g/mol, even more preferred 1500 to 20000 g/mol according to gel permeation chromatography.

3. The method according to claim 2 wherein the mixture comprises 50-97 wt% of the polyethylene wax and 3-50 wt% of the low molecular weight polyethylene wax with respect to the total weight of the mixture.

4. The method according to claim 3 wherein the mixture comprises 75-90 wt% of the polyethylene wax and 10-25 wt% of the low molecular weight polyethylene wax with respect to the total weight of the mixture.

5. Method according to any of the preceding claims, wherein the ratio Mw/Mn with respect to the polyethylene wax is from 3 to 10 and/or the ratio Mw/Mn with respect to the low molecular weight polyethylene wax is from 3 to 60.

6. The method according to any of the preceding claims wherein the oxidizing is performed using oxygen-containing gas, optionally in the presence of an oxidation catalyst.

7. The oxidized polyethylene wax obtainable by the method according to any of the preceding claims.

8. Use of the oxidized polyethylene wax according to claim 7 in a wax emulsion.

9. Use of the oxidized polyethylene wax according to claim 7 as a coating agent and/or a lubricant.

10. A wax emulsion comprising
a) the oxidized polyethylene wax according to claim 7;
b) a non-ionic surfactant;
c) potassium hydroxide and/or sodium hydroxide;
d) sodium metabisulfite; and
e) water.

11. The wax emulsion according to claim 10 wherein the amount of the oxidized polyethylene wax in the wax emulsion is from 5 to 35 wt% with respect to the total weight of the wax emulsion.

12. The wax emulsion according to claim 11 wherein the amount of the oxidized polyethylene wax is from 10 to 30 wt% with respect to the total weight of the wax emulsion.

13. The wax emulsion according to claim 10 wherein the oxidized polyethylene wax has a density of 0.93-0.99 g/cm³, according to ASTM D1505.

## Patentansprüche

1. Verfahren zum Herstellen eines oxidierten Polyethylenwachses, umfassend das Oxidieren einer Mischung aus einem Polyethylenwachs mit einem Zahlenmittel des Molekulargewichts von mehr als 1000 bis 4000 g/mol, vorzugsweise mehr als 1000 bis 3000 g/mol, noch mehr bevorzugt 1200 bis 2500 g/mol gemäß Gelpermeationschromatographie und einem Polyethylenwachs mit niedrigem Molekulargewicht mit einem Zahlenmittel des Molekulargewichts von 100 bis 1000 g/mol, vorzugsweise 100 bis 900 g/mol, noch mehr bevorzugt 200 bis 800 g/mol gemäß Gelpermeationschromatographie, wobei
das Polyethylenwachs eine Dichte im Bereich von 0,92 - 0,97 g/cm³ gemäß ASTM D1505 aufweist;
das Polyethylenwachs mit niedrigem Molekulargewicht eine Viskosität von 40 bis 200 m Pa·s (cP) gemäß ASTM D3236 aufweist; und
das oxidierte Polyethylenwachs eine Säurezahl von 15 bis 35 gemäß ASTM D1386 aufweist.

2. Verfahren nach Anspruch 1, wobei das Polyethylenwachs ein Gewichtsmittel des Molekulargewichts von 4000 bis 20000 g/mol, vorzugsweise 4000 bis 18000 g/mol, noch bevorzugter 4500 bis 16000 g/mol gemäß Gelpermeationschromatographie aufweist und/oder das Polyethylenwachs mit niedrigem Molekulargewicht ein Gewichtsmittel des Molekulargewichts von 100 bis 30000 g/mol, vorzugsweise 1000 bis 25000 g/mol, noch bevorzugter 1500 bis 20000 g/mol gemäß Gelpermeationschromatographie aufweist.

3. Verfahren nach Anspruch 2, wobei die Mischung 50-97 Gew.-% des Polyethylenwachs und 3-50 Gew.-% des Polyethylenwachs mit niedrigem Molekulargewicht in Bezug auf das Gesamtgewicht der Mischung umfasst.

4. Verfahren nach Anspruch 3, wobei die Mischung 75-90 Gew.-% des Polyethylenwachs und 10-25 Gew.-% des Polyethylenwachses mit niedrigem Molekulargewicht in Bezug auf das Gesamtgewicht der Mischung umfasst.

5. Verfahren nach einem der vorhergehenden Ansprüche, wobei das Verhältnis Mw/Mn in Bezug auf das Polyethylenwachs von 3 bis 10 ist und/oder das Verhältnis Mw/Mn in Bezug auf das Polyethylenwachs mit niedrigem Molekulargewicht von 3 bis 60 ist.

6. Verfahren nach einem der vorhergehenden Ansprüche, wobei das Oxidieren unter Verwendung von sauerstoffhaltigem Gas, gegebenenfalls in Gegenwart eines Oxidationskatalysators, durchgeführt wird.

7. Oxidiertes Polyethylenwachs, erhältlich durch das Verfahren nach einem der vorhergehenden Ansprüche.

8. Verwendung des oxidierten Polyethylenwachs nach Anspruch 7 in einer Wachsemulsion.

9. Verwendung des oxidierten Polyethylenwachses nach Anspruch 7 als ein Beschichtungsmittel und/oder ein Schmiermittel.

10. Eine Wachsemulsion, umfassend
a) das oxidierte Polyethylenwachs nach Anspruch 7;
b) ein nichtionisches Tensid;
c) Kaliumhydroxid und/oder Natriumhydroxid;
d) Natriummetabisulfit; und
e) Wasser.

11. Wachsemulsion nach Anspruch 10, wobei die Menge des oxidierten Polyethylenwachses in der Wachsemulsion 5 bis 35 Gew.-% in Bezug auf das Gesamtgewicht der Wachsemulsion beträgt.

12. Wachsemulsion nach Anspruch 11, wobei die Menge des oxidierten Polyethylenwachses 10 bis 30 Gew.-% in Bezug auf das Gesamtgewicht der Wachsemulsion beträgt.

13. Wachsemulsion nach Anspruch 10, wobei das oxidierte Polyethylenwachs eine Dichte von 0,93-0,99 g/cm³ gemäß ASTM D1505 aufweist.

## Revendications

1. Procédé de préparation d'une cire de polyéthylène oxydée comprenant l'oxydation d'un mélange d'une cire de polyéthylène ayant une masse moléculaire moyenne en nombre, déterminée par chromatographie par perméation de gel, qui va de plus de 1 000 à 4 000 g/mol, préférablement de plus de 1 000 à 3 000 g/mol, encore plus préférablement de 1 200 à 2 500 g/mol, et d'une cire de polyéthylène de faible masse moléculaire ayant une masse moléculaire moyenne en nombre, déterminée par chromatographie par perméation de gel, qui va de 100 à 1 000 g/mol, préférablement de 100 à 900 g/mol, encore plus préférablement de 200 à 800 g/mol,
où la cire de polyéthylène a une densité, déterminée conformément à la norme ASTM D1505, dans la plage de 0,92-0,97 g/cm³ ;
la cire de polyéthylène de faible masse moléculaire a une viscosité, déterminée conformément à la norme ASTM D3236, qui va de 40 à 200 mPa·s (cP) ; et
la cire de polyéthylène oxydée a un indice d'acide, déterminé conformément à la norme ASTM D1386, qui va de 15 à 35.

2. Procédé selon la revendication 1, où la cire de polyéthylène a une masse moléculaire moyenne en poids, déterminée par chromatographie par perméation de gel, qui va de 4 000 à 20 000 g/mol, préférablement de 4 000 à 18 000 g/mol, encore plus préférablement de 4 500 à 16 000 g/mol, et/ou la cire de polyéthylène de faible masse moléculaire a une masse moléculaire moyenne en poids, déterminée par chromatographie par perméation de gel, qui va de 100 à 30 000 g/mol, préférablement de 1 000 à 25 000 g/mol, encore plus préférablement de 1 500 à 20 000 g/mol.

3. Procédé selon la revendication 2 où, rapportés au poids total du mélange, le mélange comprend 50-97 % en poids de la cire de polyéthylène et 3-50 % en poids de la cire de polyéthylène de faible masse moléculaire.

4. Procédé selon la revendication 3 où, rapportés au poids total du mélange, le mélange comprend 75-90 % en poids de la cire de polyéthylène et 10-25 % en poids de la cire de polyéthylène de faible masse moléculaire.

5. Procédé selon l'une quelconque des revendications précédentes, où le rapport Mw/Mn pour la cire de polyéthylène va de 3 à 10 et/ou le rapport Mw/Mn pour la cire de polyéthylène de faible masse moléculaire va de 3 à 60.

6. Procédé selon l'une quelconque des revendications précédentes, où l'oxydation est effectuée en utilisant un gaz contenant de l'oxygène, éventuellement en la présence d'un catalyseur d'oxydation.

7. Cire de polyéthylène oxydée pouvant être obtenue par le procédé selon l'une quelconque des revendications précédentes.

8. Utilisation de la cire de polyéthylène oxydée selon la revendication 7 dans une émulsion cireuse.

9. Utilisation de la cire de polyéthylène oxydée selon la revendication 7 comme agent d'enrobage et/ou lubrifiant.

10. Émulsion cireuse comprenant
a) la cire de polyéthylène oxydée selon la revendication 7 ;
b) un surfactant non ionique.
c) de l'hydroxyde de potassium et/ou de l'hydroxyde de sodium ;
d) du métabisulfite de sodium ; et
e) de l'eau.

11. Émulsion cireuse selon la revendication 10, où la quantité de cire de polyéthylène oxydée dans l'émulsion cireuse, rapportée au poids total de l'émulsion cireuse, va de 5 à 35 % en poids.

12. Émulsion cireuse selon la revendication 11, où la quantité de cire de polyéthylène oxydée, rapportée au poids total de l'émulsion cireuse, va de 10 à 30 % en poids.

13. Émulsion cireuse selon la revendication 10, où la cire de polyéthylène oxydée a une densité, déterminée conformément à la norme ASTM D1505, de 0,93-0,99 g/cm³.
